# FASCICULE DE BREVET EUROPEEN

(11) **EP 0 562 064 B1**
(45) Date de publication et mention de la délivrance du brevet: **20.12.1995**
(21) Numéro de dépôt: 92918960.3
(22) Date de dépôt: 20.08.1992
(51) Int. Cl.: A47J 36/24, A47J 39/02, A47G 23/08

(54) **DISPOSITIF POUR LE TRANSPORT ET LA DISTRIBUTION DE PLATEAUX-REPAS AVEC REMISE EN TEMPERATURE DES ALIMENTS PAR FOUR MICRO-ONDES**
VORRICHTUNG ZUM BEFÖRDERN UND VERTEILEN VON SERVIERTABLETTS MIT ERWÄRMUNG VON NAHRUNGSMITTEL DURCH EIN MIKROWELLENGERÄT
DEVICE FOR THE TRANSPORT AND DISTRIBUTION OF MEAL TRAYS, INCLUDING INTEGRAL MICORWAVE OVENS FOR REHEATING THE LATTER

(30) Priorité: 23.08.1991 FR 9110755
(43) Date de publication de la demande: 29.09.1993
(73) Titulaire: SOCAMEL S.A., F-38140 Renage (FR)
(72) Inventeur: BEIZERMANN, Michel, F-38500 Voiron (FR)
(74) Mandataire: Bourgognon, Jean-Marie
(86) Numéro de dépôt international: FR9200807
(87) Numéro de publication internationale: WO9303659

(56) Documents cités:
- FR-A- 2 363 309
- FR-A- 2 647 660
- US-A- 3 199 579
- US-A- 4 198 555

## Description

La présente invention a pour objet un dispositif pour le transport et la distribution de plateaux-repas avec remise en température des aliments par four micro-ondes.

Il est destiné à la distribution de repas individuels sur plateaux dans les collectivités, et plus particulièrement dans les hôpitaux.

Dans les dispositifs similaires réalisés à ce jour, les plats chauds sont retirés de chaque plateau et regroupés pour être réchauffés tous ensembles dans un dispositif ad hoc, puis sont à nouveau déposés sur chaque plateau pour être distribués. Cette pratique fait que lorsque le dernier plateau est distribué, le ou les mets chauds sont déjà froids.

Le document FR-A-2 647 660 résout partiellement ces problèmes. Il décrit un dispositif permettant de réchauffer individuellement les mets chauds de chaque plateau au dernier moment en les laissant sur leur plateau. Ce dispositif est constitué d'un chariot isotherme équipé de compartiments réfrigérés pour les plateaux repas et d'au moins une cavité à micro-ondes comportant une zone froide et une zone chaude surbaissée par rapport à cette dernière, les plateaux-repas ayant une forme spécifique permettant de remettre en température les aliments à consommer chauds dans la zone Surbaissée, sans chauffer les mets froids situés sur le même plateau, ce résultat étant obtenu par une séparation transversale médiane du plateau avec un écran métallique incorporé pour empêcherles ondes de se propager vers la zone froide du plateau, la séparation médiane du plateau venant par son profil réhaussé, obturer la zone chaude surbaissée de la cavité micro-ondes.

Cette disposition présente deux inconvénients majeurs. Tout d'abord, les plateaux-repas, en raison de leur écran métallique incorporé sont complexes à fabriquer et par conséquent onéreux. Ensuite, le chariot isotherme avec l'ensemble de ses équipements s'avère fragile, lourd et encombrant, ce qui se manifeste particulièrement lors des déplacements entre cuisine et unité d'hospitalisation.

Le dispositif selon la présente invention supprime ces inconvénients. En effet, il permet de retrouver tous les avantages du brevet ci-dessus, tout en utilisant des plateaux-repas de construction simplifiée et de faible prix de revient, et en facilitant le déplacement de ces plateaux.

Il est constitué par la combinaison d'abord, d'un chariot navette isotherme sans équipement technique, destiné à transporter les plateaux-repas entre les cuisines et les unités d'hospitalisation, ensuite, d'une chariot technique restant à demeure dans les unités d'hospitalisation, auquel on peut accoupler un ou deux chariots navettes en formant ainsi une unité mobile de distribution, enfin d'une ou deux cavités micro-ondes installées sur le chariot technique et comportant un écran métallique incorporé entre zone chaude et froide, ce qui permet d'utiliser des plateaux-repas dépourvus d'écran.

Sur les dessins annexés, donnés à titre d'exemple non limitatif, d'une des formes de réalisation de l'objet de l'invention :
La figure 1 représente une unité mobile de distribution équipée de deux chariots navettes et d'une cavité micro-ondes.
Les figures 2, 3 et 4 sont des coupes schématiques de la cavité micro-ondes, respectivement horizontale suivant les flèches B-B de la figure 3, verticale longitudinale, suivant les flèches A-A de la figure 2 et verticale transversale, suivant les flèches C-C de la figure 3.

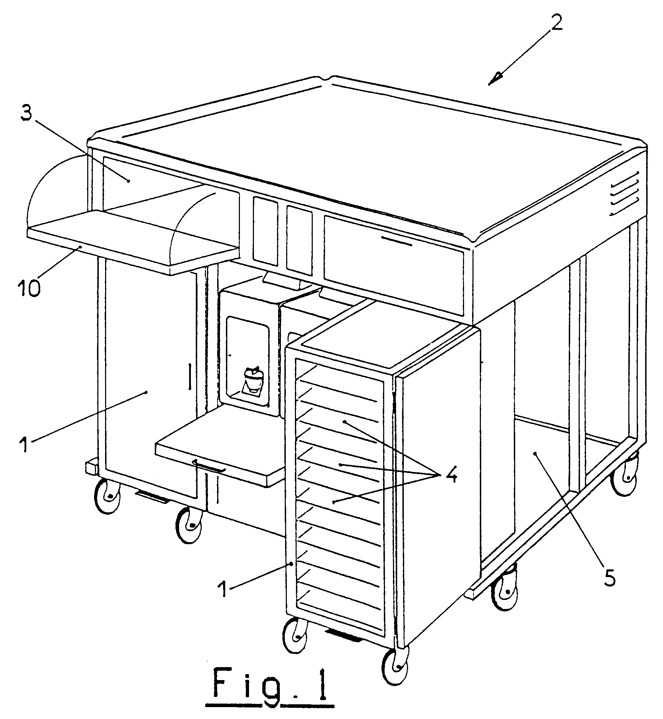

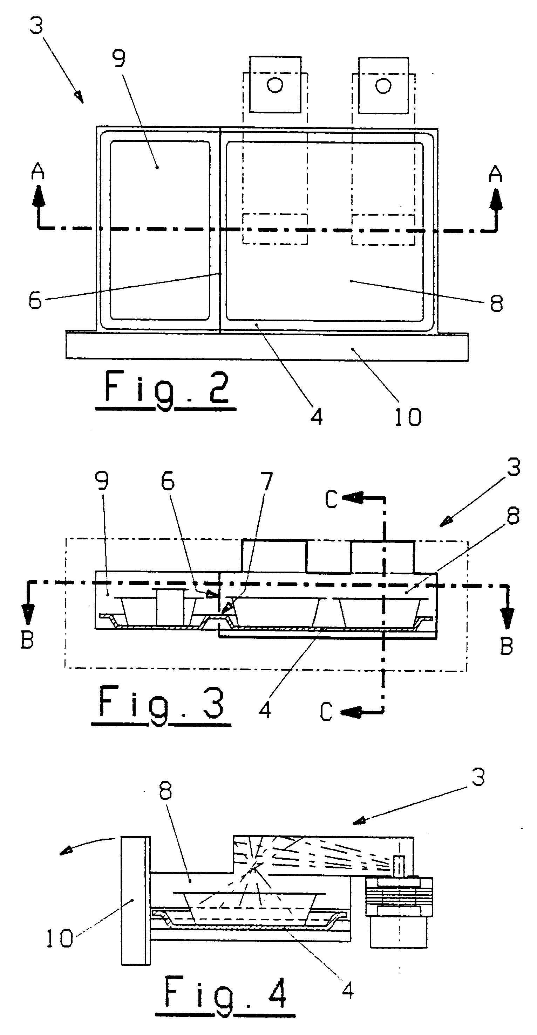

Le dispositif, figures 1 à 4, est constitué d'un ou deux chariots navettes 1 isothermes, et d'un chariot technique 2 équipé d'une ou deux cavités micro-ondes 3.

Le chariot navette 1 dénué de toute partie technique fragile et sensible aux vibrations, chocs et mauvais traitements, assure le transport aller et retour des plateaux-repas 4 entre les cuisines et les unités d'hospitalisation.

Le chariot technique 2 reste à demeure dans les unités d'hospitalisation et comporte en partie supérieure une ou deux cavités micro-ondes 3, la partie inférieure étant agencée en une ou deux niches 5 dans lesquelles viennent se loger et se verrouiller les chariots navettes 1.

Les deux types de chariots accouplés forment une unité mobile de distribution et de remise en température des plateaux-repas 4.

Le débarrassage et le ramassage des plateaux-repas 4 sales, après le repas ne s'effectuent qu'avec le chariot navette 1 très léger et très maniable, qui permettra de ramener les plateaux en cuisine, vers la laverie centrale . Le chariot technique préalablement désaccouplé sera rangé dans l'office en attente du repas suivant.

La cavité micro-ondes 3 s'ouvre dans le sens longitudinal, et non pas latéral comme c'est le cas habituellement. Elle est divisée en deux parties inégales toutes deux surbaissées, un secteur chaud 8 et un secteur froid 9, par un écran formé d'une cloison métallique 6 perpendiculaire à la porte de la porte 10 de la cavité 3 et munie d'une fente 7 horizontale ayant l'épaisseur du plateau-repas 4 et dont la longueur correspondant à la largeur dudit plateau-repas. Ce dernier, qui ne comporte par conséquent pas d'écran métallique, est introduit dans la cavité micro-ondes 3 en le glissant dans la fente 7, la position de l'écran métallique étant déterminée pour que la zone du plateau recevant les aliments froids vienne se loger dans le secteur froid 9, tandis que la zone recevant les aliments à remettre en température prenne place dans le secteur chaud 8.

Le positionnement des divers éléments constitutifs donne à l'objet de l'invention un maximum d'effets utiles qui n'avaient pas été, à ce jour, obtenus par des dispositifs similaires.

## Revendications

1. Dispositif pour le transport et la distribution de plateaux-repas avec remise en température des aliments par four micro-ondes, destiné à la distribution de repas individuels dans les collectivités, et plus particulièrement dans les hôpitaux, caractérisé par la combinaison d'abord, d'un chariot navette (1) isotherme sans équipement technique destiné à transporter les plateaux-repas (4) entre les cuisines et les unités d'hospitalisation, ensuite, d'un chariot technique (2) restant à demeure dans lesdites unités d'hospitalisation, auquel on peut accoupler un ou deux chariots navettes (1) en formant ainsi une unité mobile de distribution, enfin d'une ou deux cavités micro-ondes (3) installées en partie haute du chariot technique (2) et comportant un écran métallique (6) incorporé délimitant un secteur chaud (8) et un secteur froid (9) permettant d'utiliser des plateaux-repas (4) dépourvus d'écrans métalliques.

2. Dispositif selon la revendication 1, se caractérisant par le fait que la cavité micro-ondes (3) s'ouvre dans le sens longitudinal, l'écran métallique (6) étant perpendiculaire à la porte (10) de la cavité et pourvu d'une fente (7) horizontale ayant l'épaisseur dudit plateau-repas, la position de l'écran métallique (6) étant telle que l'on puisse introduire ce dernier dans la cavité micro-ondes (3) en le glissant dans la fente (7), de manière à ce que la zone du plateau-repas recevant les aliments froids viennent se loger dans le secteur froid (9) de la cavité micro-ondes, tandis que la zone recevant les aliments à remettre en température prennent place dans le secteur chaud (8)

## Claims

1. Device for the transport and distribution of meal trays including microwave ovens for re-heating the food, intended for the distribution of individual meals in institutions, and more particularly hospitals, characterised by the combination of, firstly, a technically unequipped isothermic mobile trolley (1) for transporting food trays (4) between the kitchens and the hospital wards and, secondly, a technically equipped unit (2) permanently situated in said hospital wards, to which one or two mobile trolleys (1) can be coupled, thereby forming a mobile distribution unit, and lastly one or two microwave ovens (3) installed in an upper part of the technical unit (2) and comprising a metal shield (6) incorporated therein to define a hot sector (8) and a cold sector (9) making it possible to use meal trays (4) without a metal shield.

2. Device according to claim 1, characterised in that the microwave oven (3) opens longitudinally, the metal shield (6) being perpendicular to the door (10) of the oven and provided with a horizontal slot (7) the same width as the meal tray, the position of the metal shield (6) being such that the meal tray can be inserted in the microwave oven (3) by sliding it into the slot (7), so that the area of the meal tray containing the cold food is accommodated in the cold sector (9) of the microwave oven, whereas the zone containing the food to be re-heated is positioned in the hot sector (8).

## Patentansprüche

1. Vorrichtung zum Transport und zur Verteilung von Speisetabletts mit Erhaltung der Temperatur der Nahrungsmittel durch Mikrowellenherde, bestimmt zur Verteilung einzelner Mahlzeiten in Gemeinschaftseinrichtungen, insbesondere in Krankenhäusern, gekennzeichnet durch die Folgende Kombination: ein isothermischer Transportwagen (1) ohne technische Ausstattung bestimmt für den Transport der Speisetabletts (4) zwischen den Küchen und den Räumlichkeiten der Krankenhäuser; ein Technikwagen (2) zum Verbleib in den erwähnten Räumlichkeiten, mit dem man ein oder zwei Transportwagen (1) verbinden kann, so daß eine mobile Verteilungseinrichtung ensteht, und schließlich ein oder zwei im oberen Bereich des Technikwagens (2) angeordnete Mikrowellen-Schächte (3) mit einer darin befindlichen metallischen Zwischenwand (6) zur Abgrenzung einer Heißzone (8) und einer Kaltzone (9), wodurch die Benutzung von Speisetabletts (4), die keine metallischen Zwischenwände aufweisen, ermöglicht wird.

2. Vorrichtung nach Anspruch 1, dadurch gekennzeichnet, daß sich der Mikrowellen-Schacht (3) in Längsrichtung öffnet, wobei die metallische Zwischenwand (6) senkrecht zur Tür (10) des Mikrowellen-Schachtes angeordnet und mit einem horizontalen Spalt (7) versehen ist, welcher die Dicke des besagten Speisetabletts entspricht, wobei die metallische Zwischenwand (6) so positioniert ist, daß man das Speisetablett in den Mikrowellen-Schacht (3) gleitend im Spalt (7) einführen kann, und zwar in der Weise, daß der Bereich des Speisetabletts mit den kalten Nahrungsmitteln in die Kaltzone (9) des Mikrowellen-Schachtes gelangt, während der Bereich des Speisetabletts mit den warmzuhaltenden Nahrungsmitteln in der Heißzone (8) Platz findet.
